# EUROPEAN PATENT SPECIFICATION

(11) **EP 3 098 016 B1**
(45) Date of publication and mention of the grant of the patent: **11.04.2018**
(21) Application number: 15382277.0
(22) Date of filing: 26.05.2015
(51) Int. Cl.: B23K 26/00, B23K 26/06, B23K 26/362, B41M 5/26, B41J 2/475

(54) **METHOD OF AND SYSTEM FOR LASER MARKING A SUBSTRATE USING SYNCHRONISED LASER BEAMS**
VERFAHREN UND SYSTEM ZUR LASERMARKIERUNG EINES SUBSTRATS UNTER VERWENDUNG VON SYNCHRONISIERTEN LASERSTRAHLEN
PROCÉDÉ ET SYSTÈME DE MARQUAGE AU LASER D'UN SUBSTRAT EMPLOYANT DES FAISCEAUX LASER SYNCHRONISES

(43) Date of publication of application: 30.11.2016
(73) Proprietor: Jeanología, S.L., 46980 Paterna, Valencia (ES)
(72) Inventor: SANS RAVELLAT, Ramon, 46980 Paterna (ES); HENDRYCH, Martin, 46980 Paterna (ES)
(74) Representative: Gallego Jiménez, José Fernando

(56) References cited:
- DE-T5-112012 006 740
- JP-A- 2004 017 104
- KR-A- 20130 048 005
- US-A1- 2008 123 509

## Description

### Field of the art

The present invention generally relates to a method of marking a substrate and to a system for marking a substrate according to the preamble of claims 1 and 7 respectively (see, for example, US2008/123509 A1).

The present invention is particularly applied to the laser marking of fabrics.

### Prior State of the Art

In the field of laser marking of objects, there are some prior art proposals aimed at minimizing the laser energy required for marking, either with the aim to use lasers of lower power or to increase the marking speed or both, and which are based on the heating (generally pre-heating) of the areas of the substrate to be marked. The following patent documents disclose the most relevant of said proposals.

JP2004017104A discloses a laser marker including pre-heating means for pre-heating the area of the substrate to be marked and a semiconductor laser for marking the pre-heated area. The use of a semiconductor laser of relatively low output is possible for marking because of the mentioned pre-heating of the area of the substrate to be marked.

In JP2004017104A the pre-heating means include a high power lamp or, for an alternative embodiment, the same marking laser diode, in which case said laser diode is used collimated in a pre-heating step and, after the pre-heating step, it is used condensed into a focused marking spot for the marking step.

EP1684986B1 discloses a laser marking system which uses a low energy laser array for marking a substrate, together with a heater to heat the substrate prior to radiating the substrate so that the energy required to be provided by the array of lasers for marking the substrate is minimized. For some embodiment, the heater for performing the pre-heating of the substrate is a light emitter, such as a laser. For all the embodiments disclosed in EP1684986B1 the heater is stationary, i.e., the pre-heating radiation is not moved.

International Application WO2011035909A1 discloses another proposal sharing the same concept with the above identified patent documents, related to the minimizing of the laser energy required for marking a substrate by additional submitting the area to be marked to a further irradiation which already energizes the same so that the combined irradiations causes the marking. This patent document discloses the features included in the preamble clause of the independent claims of the present invention, particularly at the last paragraph of its description when stating that the energizing irradiation and the marking irradiation can be applied at least partly overlapping each other in time.

In the proposal of WO2011035909A1, the energizing irradiation is applied to the complete laser sensitive area of the substrate which includes the portion to be laser marked, and, although there are disclosed embodiments for which the substrate is running and the marking is made on the fly and other embodiments for which the substrate to be marked may instead be stationary, moved in slow speed or moved by indexing a step at a time, none of said embodiments neither discloses nor suggests the moving of the energizing irradiation through various sensitive areas of the substrate.

### Description of the Invention

It is necessary to offer an alternative to the state of the art which covers the gaps found therein by the provision of a method and of a system which allows the laser marking of a substrate with a low energy laser and/or at high marking speeds along various areas of the substrate, thus allowing costs reduction and increase of the manufacturing productivity, i.e., the output per hour, when applied to an industrial process for laser marking of objects, such as articles of clothing.

To that end, the present invention provides a method of laser marking a substrate as defined in claim 1. Contrary to the method disclosed in WO2011035909A1, in the method of the first aspect of the present invention, the irradiation of said step a) and the irradiation of said step b) are performed by directing both the energizing radiation and the marking laser beam towards various areas of said substrate and portions thereof, respectively, in a synchronized manner.

Said synchronized movements allow the laser marking of various regions of the substrate optimally, as, contrary to WO2011035909A1, the laser scanning is not performed along a stationary and fixed energized area, but through moving areas which are being energized while being laser marked and undergoing a required movement along the substrate.

For a preferred embodiment, the substrate is a fabric, such as denim, and constitutes or will be used to manufacture an article of clothing. None of the above mentioned prior art documents disclose the use of fabric substrates.

For an embodiment, at least said areas of the substrate are heat-sensitive, the energizing radiation source of step a) being a heat energy source selected to heat said areas.

For another embodiment, complementary or alternative to the above mentioned embodiment, at least said areas of the substrate are wavelength-sensitive for a specific wavelength, said radiation generated by said energizing radiation source of step a) being in the form of a radiation wave having said specific wavelength. According to the present invention, the method of the present invention comprises performing said synchronized radiation movements such that at least some of said various areas of the substrate are partially overlapped and at least some of said portions thereof are included in the overlapped regions resulting from said areas overlapping. Hence, and according to the present invention, the marking radiation is applied to a region which is being irradiated simultaneously with the energizing radiation but which has also been pre-energized by a previous irradiation with the energizing radiation, as said region includes at least one section of each of two consecutive of the mentioned areas of the substrate: a first one already energized and another being currently energized. This embodiment improves the results obtained with the method of the present invention, in terms of energy requirements for the marking laser and/or marking speed.

In this sense, the energy density for both, the energizing radiation and the marking laser beam, must be well calculated taking into account whether the laser marks will be made in overlapping energized regions or not.

Preferably, the energizing radiation source is an energizing laser source (such as a CO₂ laser source) configured and arranged to generate an energizing laser beam impinging on said areas of the substrate with a spot diameter approximately one order of magnitude larger than the spot diameter of the marking laser beam impinging on said portions of said areas.

For an embodiment, said spot diameter of the impinged zone of the energizing laser beam is in the order of several millimetres, while the spot diameter of the impinged zone of the marking laser beam is in the order of tens to hundreds of micrometres.

Such a spot diameter of the energizing laser beam when impinging on the substrate areas is achieved, for a preferred embodiment, by using a collimated energizing laser beam having a beam diameter coincident with said spot diameter, although for another less preferred embodiment the energizing laser beam is focused but to a focal plane which is in front or behind the substrate plane. In any case, the power density of the energizing laser beam when impinging on the substrate will be much lower than the power density of the marking laser beam when impinging on the substrate.

Other kind of energizing radiation sources are also covered by the present invention, according to less preferred embodiments, such as an infrared radiation source or a hot air radiation source.

In general, the marking laser source operates according to a pulsed laser mode, although its operation according to a continuous wave mode is also embraced by the present invention but less preferred.

As stated above, the irradiations from the energizing radiation source and from the marking laser source are at least partly overlapping each other in time, which means that, depending on the embodiment, both irradiations will start and end at the same moment, or that the irradiation from the energizing radiation source will start before the one from the laser marking radiation, the latter ending before or at the same time as the former. The present invention relates to a system for marking a substrate as defined in claim 7. Contrary to the system disclosed in WO2011035909A1, in the system of the present invention:
- said first and second irradiation means comprise radiation redirecting means, and
- said control means are configured and arranged to control the operation of said radiation redirecting means to make them move both the energizing radiation and the marking radiation beam, redirecting them towards various areas of said substrate and portions thereof, respectively, in a synchronized manner.

Preferably, the substrate is a fabric, such as denim.

According to an embodiment, the energizing radiation source is an energizing laser source configured and arranged to generate an energizing laser beam impinging on said areas of the substrate with a spot diameter approximately one order of magnitude larger than the spot diameter of the marking laser beam impinging on said portions of said areas.

For an embodiment, said radiation redirecting means comprises a joint light reflecting and/or light deflecting and/or light diffracting arrangement for redirecting both the energizing and the marking laser beams simultaneously towards said various areas of the substrate and portions thereof.

For a variant of said embodiment, the system of the second aspect of the invention comprises an optical combiner configured and arranged for combining the energizing and the marking laser beams such that the resulting combined laser beams enter said common light reflecting and/or light deflecting arrangement collinearly following a common optical path.

For an alternative variant of said embodiment, the optical axes of the energizing and the marking laser beams are inclined with respect to each other at the entry of said common light reflecting and/or light deflecting arrangement, and combined there within by a reflecting, deflecting or diffracting element such that they exit therefrom collinearly following a common path.

Said common light reflecting and/or light deflecting arrangement is, for a preferred embodiment, a galvanometer scanner, and, for another embodiment it comprises a polygon scanner.

According to another embodiment, alternative to the one described above, instead of said common light reflecting and/or light deflecting arrangement, the radiation redirecting means comprises two physically independent, but operationally synchronized, light reflecting and/or light deflecting arrangements (such as galvanometer scanners or polygon scanners), each for respectively redirecting one of said energizing and marking laser beams towards said various areas of the substrate and portions thereof.

### Brief Description of the Drawings

The previously described advantages and other features will be more fully understood from the following detailed description of embodiments, with reference to the attached drawings, which must be considered in an illustrative and non-limiting manner, in which:
Figure 1 schematically shows an optical arrangement including a galvanometer, for implementing the method of the first aspect of the invention, according to an embodiment, for laser marking a substrate, where the depicted elements form part of the system of the second aspect of the invention, for an embodiment;
Figure 2 shows an arrangement similar to the one of Figure 1 but with a different beam combiner, for another embodiment;
Figure 3 schematically shows another optical arrangement, for another embodiment, which differs from the ones of Figures 1 and 2 in that it functions without a beam combiner before the galvanometer;
Figure 4 shows two energizing laser spots performed in two corresponding overlapped areas of a substrate, and two marking laser spots performed in two portions of said areas centred with respect thereto.
Figures 5a and 5b show a row of *n* energizing laser spots performed in *n* corresponding overlapped areas of a substrate (overlapping of the areas A being different in the two figures), according to an embodiment of the method of the present invention, and a row of *n* marking laser spots performed in *n* respective portions of said areas, said *n* marking spots being aligned and suitable in case of overlapping to form a marking line;
Figure 6 shows a block diagram of the system of the present invention, for an embodiment valid for implementing the method of the invention according to the embodiments of Figures 1 and 2, i.e., to the ones using a beam combiner and a common galvanometer; and
Figure 7 schematically shows a further optical arrangement, for an embodiment which is alternative to the ones of Figures 1 and 2, which differs therefrom mainly in that it includes two independent galvanometers, one for the energizing beam and the other for the laser marking beam.

### Detailed Description of Several Embodiments

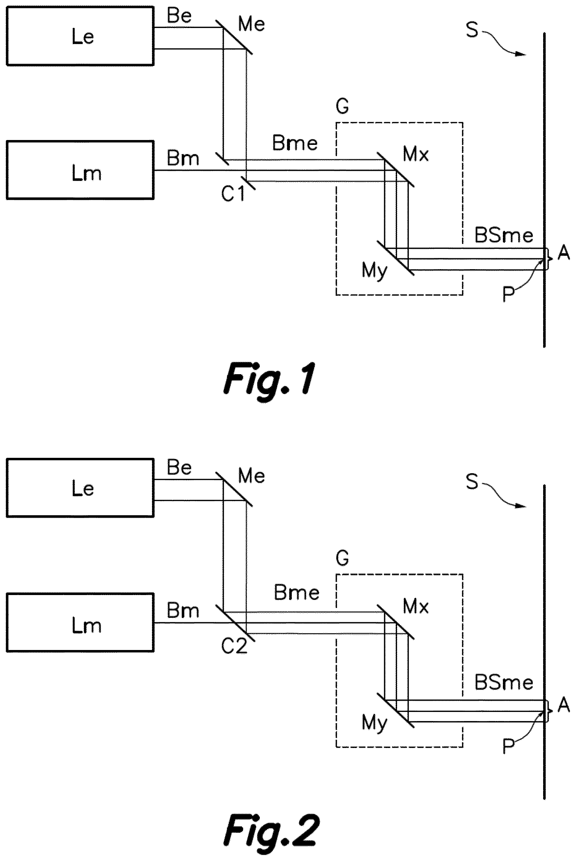

Figures 1-3 and 7 show different optical arrangements representative of different embodiments of the present invention, all of them including the above described energizing laser source Le generating an energizing laser beam Be in an area A, and the marking laser source Lm generating a marking laser beam Bm in an area or portion P.

For a non-limitative application example, the power density of the marking laser beam Bm when impinging on the substrate S is of the order of hundreds of MW/m² (such as of 600 MW/m²), which causes the volatilization of surface particles of the material, which when, for a preferred embodiment, the material of the substrate is denim (such as jeans), i.e., a dyed fabric, the fabric dye is eliminated (at least partially) which causes a worn look effect, while the power density of the energizing laser beam Be being when impinging on the substrate S is only of the order of a few MW/m² (such us 6 MW/m²) which does not cause a volatilization effect but a thermal transfer process which ultimately brings about an increase in the surface temperature. In fact, a diameter ratio A/P of the order of 10 results in the power density ratio of the order of 100.

By moving both beams Be and Bm simultaneously, in space and time, both the energizing (generally heating) of the regions to be marked (and surrounding regions) and the marking thereof are performed at a time, i.e., the marking laser energy is applied while the energizing laser energy is also being applied, even if deciding to mark different and distant regions of the substrate S following fast and intricate movements, as the movements of the marking laser beam Bm are synchronously followed by the movements of the energizing laser beam Be.

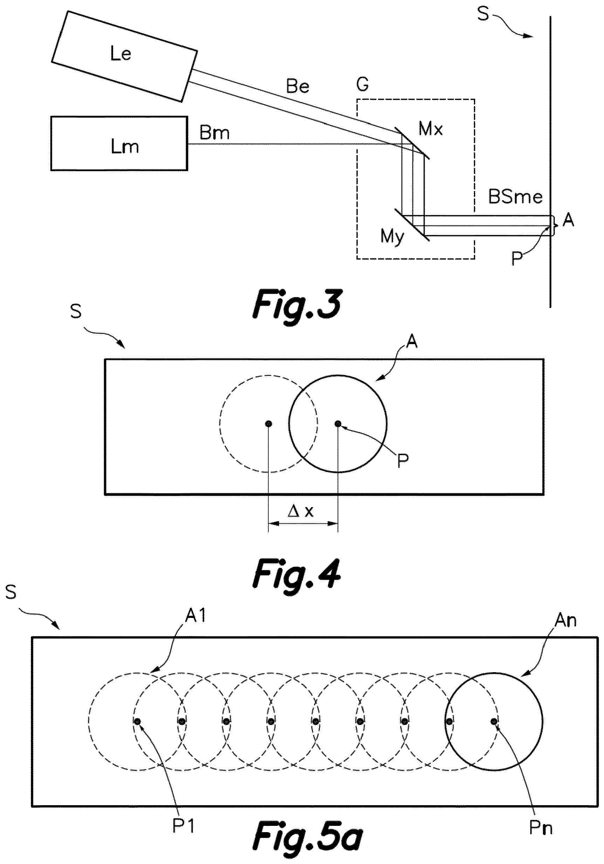

Figure 4 shows how the energy is distributed on the substrate S, particularly in the laser impinging regions, by particularly showing two energized pulsed laser spots performed with beam Be in two corresponding overlapped areas A of the substrate S and two pulsed marking laser spots performed with beam Bm in two centred portions P of said areas A. The marks are only caused at portions P, as the energy threshold required for marking is only achieved in said portions P. The value of Δx is defined by the number of pixels *n* between the two focus points, i.e., between two consecutive portions P, each of these focus points being associated to a time, which is defined as pixel time p(t), where Δx = n·p(t). Therefore pixel time is the time during which each pixel is irradiated.

The present inventors have performed several experimental tests of laser marking on different kind of denims (pure indigo, sulphide indigo, viscose, etc.) with different power levels of the energizing laser beam Be, with one and even several consecutive steps for applying the laser marking beam Bm on the same spots, with and without pre-heating the substrate S, with different pixel times (shorter than the pixel times used when only Bm is applied), etc., and the obtained results have shown the suitability and accuracy of the present invention as compared with the proposals of the prior art, particularly due to the fact that the regions to be marked are submitted to the laser energy from both laser beams Be and Bm simultaneously, and thus said regions have not begun to de-energize/cool when Bm is applied thereto.

The results of said experimental tests also show that the different operative parameters of the system must be adjusted to each specific kind of fabric and to the dyes/pigments contained therein, in order to achieve the desired effect and not produce negative effects (such as dye thermal degradation) which could affect the quality and the colour of the final product.

Said results have also demonstrated that there are fabrics more suitable than others to be used as substrates for the method and system of the present invention.

All of the above mentioned optical arrangements, depicted in Figures 1-3 and 7, and which will be described below, allow obtaining the above mentioned synchronous beam movements.

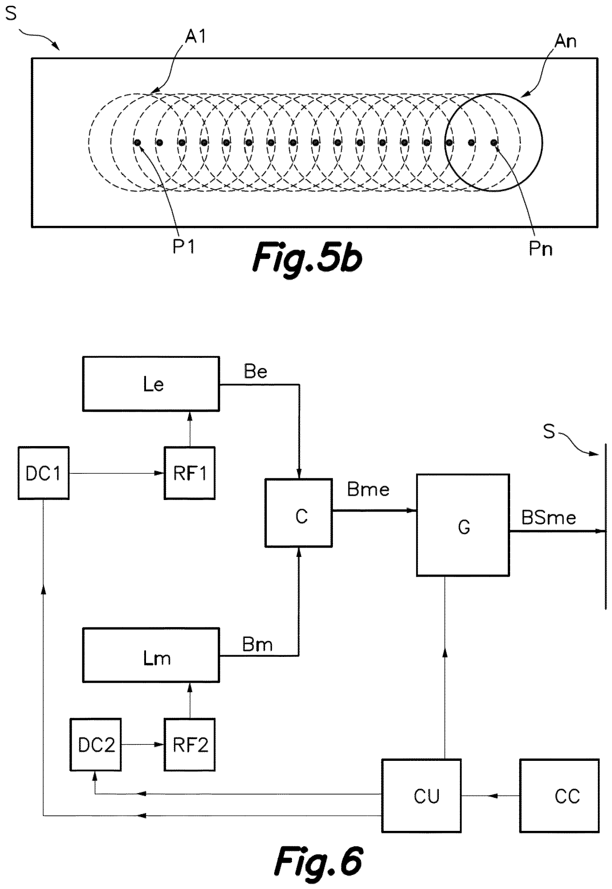

First of all, it must be pointed out that the arrangements illustrated in said Figures 1-3 and 7 do not include, for the sake of clarity, all the elements of the system of the second aspect of the invention. Particularly, said Figures do not include the control means of the laser sources Le and Lm and of the galvanometer scanners G, G1, and G2. Said control means are depicted in Figure 6 by means of block CU (CU standing for control unit) and their operation, associated to other intervening depicted elements, will be described below.

Also, for the sake of clarity, the depicted optical arrangements are simplified, where common elements, such as lenses and motors for moving mirrors Mx, My, Mx1, My1, Mx2, and My2 of galvanometer scanners G, G1 and G2, have not been depicted either, but their inclusion is covered by the present invention as they only represent slight modifications of the shown arrangements that do not require an inventive effort from a person skilled in the art.

Starting with the description of Figure 1, the optical arrangement there shown includes a common galvanometer scanner G, including moving mirrors Mx and My, for moving together both beams Be and Bm, once the beams have been combined into combined beams Bme (two overlapped beams having different spatial features, in particular their diameter and divergence), by means of optical combiner C1, which is a special mirror having an aperture facing beam Bm which allows said beam Bm to pass therethrough towards mirror Mx and a reflecting surface facing mirror Me to reflect beam Be also towards mirror Mx. The combined beams have been indicated in Figure 1 as Bme when entering the galvanometer scanner G and as BSme when exiting therefrom, the latter combined beams impinging on substrate S, particularly component Be on area A and component Bm on portion P.

The arrangement of Figure 2 only differs from the one of Figure 1 in that it includes a different beam combiner C2, particularly a conventional beam combiner which allows the passage of beam Bm therethrough while it reflects beam Be, redirecting both beams, combined in the form of Bme, towards the galvanometer scanner G. Beam combiner C2 could be a polarizing beam splitter and beams Be and Bm could have mutually orthogonal polarizations in order to reduce energy losses and to maximize the efficiency of the combining of the beams.

The arrangement of Figure 3 operates without the mentioned beam combiner, by means of providing different optical paths for the beams Be and Bm, in this case by tilting energizing laser source Le such that beam Be follows an inclined path with respect to the path followed by Bm towards mirror Mx of the common galvanometer G. In this case, beams Be and Bm are combined within galvanometer G after been reflected by mirror Mx that could be a polarizing beam splitter, diffraction grating (Be and Bm may have different wavelengths), etc., such that they exit therefrom collinearly following a common path in the form of BSme.

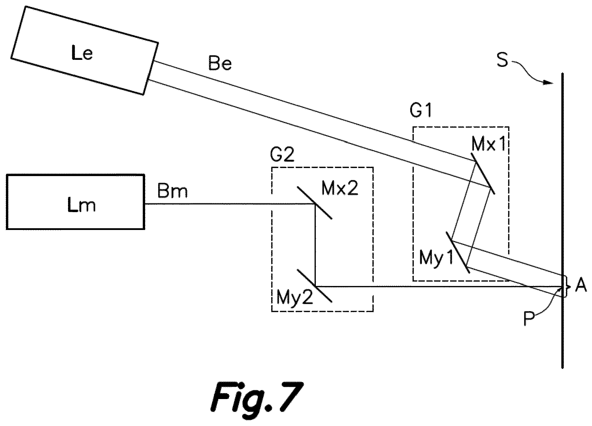

In contrast to the embodiments of Figures 1-3, the optical arrangement depicted in Figure 7 does not include a common galvanometer but two galvanometers G1 and G2, which are physically independent but operationally synchronized, one (G1) for redirecting beam Be and the other one (G2) for redirecting beam Bm.

Although in Figures 1-3 and 7 only one area A of substrate S and one portion P thereof are illustrated as being impinged by beams Be and Bm, because said Figures illustrate a static view, during operation there will be a plurality of laser impinged areas A1...An and corresponding portions P1...Pn, when the beams Be and Bm are moved thereupon, whether independently but in a synchronous manner for the embodiment of Figure 7, or jointly through combined beams BSme for the embodiments of Figures 1-3.

Those areas A1...An and portions thereof P1...Pn are depicted in Figures 5a and 5b, for an embodiment in which a marking line has been produced on substrate S, said marking line being formed by a row of *n* marking spots performed in *n* respective portions P1...Pn of *n* areas A1...An on which a row of *n* energized laser spots is produced, in this case with a much larger spot diameter than the marking spot diameter. The portions P1 ...Pn, can be centred with regard to areas A1...An, or not.

For the embodiment according to the present invention, of Figures 5a and 5b, the consecutive areas A1...An, are partially overlapped (regularly as in the Figure or irregularly), and the portions P1...Pn can be included in the overlapped regions resulting from the overlapping of said areas. This means that, for portions P2 to Pn, the marking laser beam Bm is applied not only within an area being energised at the same time with laser beam Be but also within an area which had already been energized at a previous application of laser beam Be, i.e., to a pre-energized area. For example, the marking laser beam Bm is applied to P2 at the same time that Be is applied to A2 but also once Be had already been applied to A1 at the time when Bm was applied to P1.

The distinction between areas A1...An and the distinction between portions thereof P1...Pn, as shown in Figures 5a and 5b, and described above, is due to a pulsed mode operation of both laser beams Be and Bm, with each of said areas and portions corresponding to a laser pulse of, respectively, beams Be and Bm, i.e., each of the mentioned applications of Be and Bm is made in the form of a corresponding laser pulse. However, a continuous wave operation mode is also covered by the present invention, although for a less preferred embodiment, in which case the above described overlapping between areas would not occur as no discontinuities would exist between consecutive areas. Therefore any of the laser source Le for heating and any of the laser source LM for marking can, instead of a pulsating mode, be of a continuous wave mode.

Finally, Figure 6 shows a block diagram of the system of the present invention, for an embodiment valid for implementing the method of the first aspect of the invention according to the embodiments of Figures 1 and 2, i.e., the ones using a beam combiner C and a joint galvanometer G, which apart from the optical arrangement of the system also shows, schematically, the control arrangement of the system, i.e., the control means CU controlling the operation of both laser sources Le and Lm and the operation of the common galvanometer G.

In Figure 6, control lines have been depicted as thin lines and optical lines as thicker lines.

As shown in said Figure 6, each of laser sources Le and Lm is respectively excited by a radio frequency source RF1 and RF2, which is supplied by a corresponding DC source DC1 and DC2. Other kinds of excitation sources for the laser sources Le and Lm are also possible for other embodiments (not shown) of the system of the second aspect of the invention (such as optical, electrical, gas-dynamical, chemical, or electron-beam pumping sources).

The DC supplied to the RF sources RF1 and RF2, and thus the excitation energy delivered to laser sources Le and Lm, is controlled by control unit CU, in order to control the generation of the laser beams Be and Bm, respectively.

As already described previously, with reference to Figures 1 and 2, combiner C combines both beams Be and Bm into overlapping beams Bme which enter joint galvanometer scanner G redirecting the entry beams Bme as output beams BSme towards the various areas A1...An of substrate S within which portions P1...Pn to be marked are situated.

Galvanometer scanner G is also controlled by control unit CU to modulate/scan the beams BSme (containing both beams Be and Bm) to produce the desired marking lines, according to marking patterns delivered from control computer CC and designed and/or inputted thereto by an operator.

A person skilled in the art could introduce changes and modifications in the embodiments described without departing from the scope of the invention, as it is defined in the attached claims. In particular the heating source could be of any type such as bombardment with electrons, protons or other particles, radio waves, etc., or the laser aimed to heat the various areas of the substrate could trigger an exothermic chemical reaction to heat the material to be marked instead of heating the substrate directly.

## Claims

1. A method of laser marking a substrate, comprising:
a) irradiating an area (A) of said substrate (S) with energizing radiation generated by an energizing radiation source (Le) to make said irradiated area (A) 5 require less laser energy to be laser marked; and
b) irradiating a portion (P) of said area (A) with marking radiation from a marking laser beam (Bm) generated by a marking laser source (Lm) to laser mark said portion (P) of said area (A);
wherein the irradiations from said energizing radiation source (Le) and from said marking laser source (Lm) are at least partly overlapping each other in space and time;
wherein said irradiation of said step a) and said irradiation of said step b) are performed by moving both the energizing radiation (Be) and the marking laser beam (Bm) towards various areas (A1...An) of said substrate (S) and portions (P1...Pn) thereof, respectively, in a synchronized manner;
**characterized in that** said synchronized movements of the marking radiation and the energizing radiation are performed such that at least some of the areas (A1 ...An) of said substrate (S) are partially overlapped and one or more of said portions (P1...Pn) thereof are included in the overlapped regions resulting from the overlapping of said various areas (A1...An), and **in that**
the marking radiation is applied to the portion (P) of said area (A1...An) which is being irradiated simultaneously with the energizing radiation but which has also been pre-energized by a previous irradiation with the energizing radiation, said portion (P) including at least one section of each of two consecutive areas (A1...An) of the substrate (S), one of which being already energized and another of which being currently energized.

2. The method according to Claim 1, wherein said substrate (S) is a fabric.

3. The method according to any of claims 1 or 2, wherein at least said areas (A1 ...An) of said substrate (S) are:
- heat-sensitive, with said energizing radiation source (Le) of step a) being a heat energy source selected to heat said areas (A1 ...An), and/or
- wavelength-sensitive for a specific wavelength, with said radiation generated by said energizing radiation source (Le) of step a) being in the form of a radiation wave having said specific wavelength.

4. The method according to claim 3, wherein said energizing radiation source (Le) is an energizing laser source configured and arranged to generate an energizing laser beam (Be) impinging on said areas (A1...An) of the substrate (S) with a spot diameter several times larger than the spot diameter of the marking laser beam (Bm) impinging on said portions (P1...Pn) of said areas (A1...An).

5. The method according to Claim 4, wherein said energizing laser source (Le) is configured and arranged to generate an energizing laser beam (Be) impinging on said areas (A1...An) of substrate (S) with a spot diameter approximately one order of magnitude larger than the spot diameter of the marking laser beam (Bm) impinging on said portions (P1...Pn) of said areas (A1...An).

6. The method according to any of Claims 4 or 5, wherein at least said marking laser source (Lm) operates in a pulsed laser mode.

7. A system for laser marking a substrate, comprising:
- first irradiating means comprising an energizing radiation source (Le), which is configured and arranged to irradiate an area (A) of said substrate (S) with energizing radiation generated by said energizing radiation source (Le), to make said irradiated area (A) require less laser energy in order to be laser marked
- second irradiating means comprising a marking laser source (Lm), which is configured and arranged to irradiate a portion (P) of said area (A) with marking radiation from a marking laser beam (Bm) generated by said marking laser source (Lm), and
- control means (CU) configured and arranged to control the operation of said first and second irradiating means to make them work such that the irradiations from said energizing radiation source (Le) and from said marking laser source (Lm) are at least partly overlapping each other in space and time;
- said first and second irradiation means comprise radiation redirecting means,
**characterised in that**:
- said control means (CU) is configured and arranged to control the operation of said radiation redirecting means to make move both the energizing radiation and the marking laser beam (Bm) redirecting them towards various areas (A1 ...An) of said substrate (S) and portions (P1...Pn) thereof, respectively, in a synchronized manner;
wherein said synchronized radiation movements are performed such that at least some of the areas (A1 ...An) of said substrate (S) are partially overlapped and one or more of said portions (P1...Pn) thereof are included in the overlapped regions resulting from the overlapping of said various areas (A1 ... An),
wherein the marking radiation is applied to the portion of said area (A1 ... An) which is being irradiated simultaneously with the energy radiation but which has also been pre-energized by a previous irradiation with the energizing radiation, said potion (P) including at least one section of each of two consecutive areas (A1 ... An) of the substrate (S), one of which being already energized and another of which being currently energized.

8. The system according to Claim 7, wherein said substrate (S) is a fabric.

9. The system according to Claim 7 or 8, wherein said energizing radiation source (Le) is an energizing laser source configured and arranged to generate an energizing laser beam (Be) impinging on said areas (A1...An) of the substrate (S) with a spot diameter approximately one order of magnitude larger than the spot diameter of the marking laser beam (Bm) impinging on said portions (P1...Pn) of said areas (A1 ...An).

10. The system according to Claim 7, wherein said radiation redirecting means comprises a joint light reflecting and/or light deflecting and/or light diffracting arrangement (G), for redirecting both the energizing and the marking laser beams (Be, Bm) simultaneously towards said various areas (A1...An) of the substrate (S) and portions (P1...Pn) thereof.

11. The system according to Claim 10, comprising an optical combiner (C, C1, C2) configured and arranged for combining the energizing and the marking laser beams (Be, Bm) such that the resulting combined laser beams (Bme) enter said joint light reflecting and/or light deflecting arrangement (G) co-aligned following a common optical path.

12. The system according to Claim 10, wherein the optical axes of the energizing and the marking laser beams (Be, Bm) are inclined with respect 5 to each other at the entry of said joint light reflecting and/or light deflecting and/or light diffracting arrangement (G), and combined therewithin by a reflecting element (Mx) such that they exit therefrom co-aligned following a common path.

13. The system according to Claim 11 or 12, wherein said joint light reflecting and/or light deflecting arrangement (G) is a galvanometer scanner, a polygon scanner or any other scanning mechanism.

14. The system according to Claim 7, wherein said radiation redirecting means comprises two physically independent, but operationally synchronized, light reflecting and/or light deflecting arrangements (G1, G2), each for respectively redirecting one of said energizing and marking laser beams (Be, Bm) towards said various areas (A1 ...An) of the substrate (S) and portions (P1...Pn) thereof.

## Patentansprüche

1. Verfahren zur Lasermarkierung eines Substrats, umfassend:
a) Bestrahlen eines Bereichs (A) des Substrats (S) mit energiezuführender Strahlung, die von einer energiezuführenden Strahlungsquelle (Le) erzeugt wird, damit der bestrahlte Bereich (A) 5 weniger Laserenergie benötigt, um lasermarkiert zu werden; und
b) Bestrahlen eines Abschnitts (P) des Bereichs (A) mit Markierungsstrahlung von einem Markierungslaserstrahl (Bm), der von einer Markierungslaserquelle (Lm) erzeugt wird, um den Abschnitt (P) des Bereichs (A) zu lasermarkieren;
wobei die Bestrahlungen von der energiezuführenden Strahlungsquelle (Le) und von der Markierungslaserquelle (Lm) einander zumindest teilweise räumlich und zeitlich überschneiden;
wobei die Bestrahlung in Schritt a) und die Bestrahlung in Schritt b) dadurch ausgeführt werden, indem sowohl die energiezuführende Strahlung (Be) als auch der Markierungslaserstrahl (Bm) auf synchronisierte Art und Weise jeweils auf verschiedene Bereiche (A1... An) des Substrats (S) und Abschnitte (P1... Pn) davon bewegt werden;
**dadurch gekennzeichnet, dass** die synchronisierten Bewegungen der Markierungsstrahlung und der energiezuführenden Strahlung so ausgeführt werden, dass zumindest einige der Bereiche (A1... An) des Substrats (S) sich teilweise überschneiden und einer oder mehrere der Abschnitte (P1... Pn) davon in den sich überschneidenden Regionen enthalten sind, die sich aus dem Überschneiden der verschiedenen Bereiche (A1... An) ergeben, sowie dadurch, dass
die Markierungsstrahlung auf dem Abschnitt (P) des Bereichs (A1... An) aufgebracht wird, der gleichzeitig mit der energiezuführenden Strahlung bestrahlt wird, dem jedoch auch durch eine vorangehende Bestrahlung mit der energiezuführenden Strahlung Energie zugeführt wurde, wobei der Abschnitt (P) mindestens einen Teil jedes der zwei aufeinanderfolgenden Bereiche (A1... An) des Substrats (S) enthält, wobei einem davon bereits Energie zugeführt wurde und einem anderen aktuell Energie zugeführt wird.

2. Verfahren nach Anspruch 1, wobei das Substrat (S) ein Stoff ist.

3. Verfahren nach einem der Ansprüche 1 oder 2, wobei mindestens die Bereiche (A1... An) des Substrats (S) folgendes sind:
- wärmeempfindlich, wobei die energiezuführende Strahlungsquelle (Le) aus Schritt a) eine Wärmeenergiequelle ist, die zur Erwärmung der Bereiche (A1... An) ausgewählt ist, und/oder
- wellenlängenempfindlich einer bestimmten Wellenlänge gegenüber, wobei die von der energiezuführenden Strahlungsquelle (Le) aus Schritt a) erzeugte Strahlung die Form einer Strahlungswelle hat, die diese spezifische Wellenlänge aufweist.

4. Verfahren nach Anspruch 3, wobei die energiezuführende Strahlungsquelle (Le) eine energiezuführende Laserquelle ist, die dazu konfiguriert und angeordnet ist, einen energiezuführenden Laserstrahl (Be) zu erzeugen, der auf die Bereiche (A1... An) des Substrats (S) mit einem Punktdurchmesser auftrifft, der um einige Male größer ist als der Punktdurchmesser des Markierungslaserstrahls (Bm), der auf die Abschnitte (P1... Pn) der Bereiche (A1... An) auftrifft.

5. Verfahren nach Anspruch 4, wobei die energiezuführende Laserquelle (L2) dazu konfiguriert und angeordnet ist, einen energiezuführenden Laserstrahl (Be) zu erzeugen, der auf die Bereiche (A1... An) des Substrats (S) mit einem Punktdurchmesser auftrifft, der circa eine Größenordnung größer ist als der Punktdurchmesser des Markierungslaserstrahls (Bm), der auf die Abschnitte (P1... Pn) der Bereiche (A1... An) auftrifft.

6. Verfahren nach einem der Ansprüche 4 oder 5, wobei zumindest die Markierungslaserquelle (Lm) in einem gepulsten Lasermodus betrieben wird.

7. System zur Lasermarkierung eines Substrats, umfassend:
- Erste Bestrahlungsmittel, eine energiezuführende Strahlungsquelle (Le) umfassend, die dazu konfiguriert und angeordnet ist, einen Bereich (A) des Substrats (S) mit energiezuführender Strahlung zu bestrahlen, die von der energiezuführenden Strahlungsquelle (Le) erzeugt wird, damit der bestrahlte Bereich (A) weniger Laserenergie benötigt, um lasermarkiert zu werden;
- Zweite Bestrahlungsmittel, eine Markierungslaserquelle (Lm) umfassend, die dazu konfiguriert und angeordnet ist, einen Abschnitt (P) des Bereichs (A) mit Markierungsstrahlung von einem Markierungslaserstrahl (Bm) zu bestrahlen, der von der Markierungslaserquelle (Lm) erzeugt wird; und
- Steuerungsmittel (CU), dazu konfiguriert und angeordnet, den Betrieb des ersten und zweiten Bestrahlungsmittels zu steuern, damit sie so wirken, dass die Bestrahlungen von der energiezuführenden Strahlungsquelle (Le) und von der Markierungslaserquelle (Lm) einander zumindest teilweise räumlich und zeitlich überschneiden;
- Die ersten und zweiten Bestrahlungsmittel umfassen Strahlungsumlenkungsmittel, **dadurch gekennzeichnet, dass**:
- Das Steuerungsmittel (CU) dazu konfiguriert und angeordnet ist, den Betrieb der Strahlungsumlenkungsmittel zu steuern, um sowohl die energiezuführende Strahlung als auch den Markierungslaserstrahl (Bm) so zu bewegen, dass sie auf synchronisierte Art und Weise jeweils auf verschiedene Bereiche (A1... An) des Substrats (S) und Abschnitte (P1... Pn) davon bewegt werden;
Wobei die synchronisierten Strahlungsbewegungen so ausgeführt werden, dass zumindest einige der Bereiche (A1... An) des Substrats (S) sich teilweise überschneiden und einer oder mehrere der Abschnitte (P1... Pn) davon in den sich überschneidenden Regionen enthalten sind, die sich aus dem Überschneiden der verschiedenen Bereiche (A1... An) ergeben,
wobei die Markierungsstrahlung auf dem Abschnitt des Bereichs (A1... An) aufgebracht wird, der gleichzeitig mit der energiezuführenden Strahlung bestrahlt wird, dem jedoch auch durch eine vorangehende Bestrahlung mit energiezuführender Strahlung Energie zugeführt wurde, wobei der Abschnitt (P) mindestens einen Teil jedes der zwei aufeinanderfolgenden Bereiche (A1... An) des Substrats (S) enthält, wobei einem davon bereits Energie zugeführt wurde und einem anderen aktuell Energie zugeführt wird.

8. System nach Anspruch 7, wobei das Substrat (S) ein Stoff ist.

9. System nach Anspruch 7 oder 8, wobei die energiezuführende Strahlungsquelle (Le) eine energiezuführende Laserquelle ist, die dazu konfiguriert und angeordnet ist, einen energiezuführenden Laserstrahl (Be) zu erzeugen, der auf die Bereiche (A1... An) des Substrats (S) mit einem Punktdurchmesser auftrifft, der circa eine Größenordnung größer ist als der Punktdurchmesser des Markierungslaserstrahls (Bm), der auf die Abschnitte (P1... Pn) der Bereiche (A1... An) auftrifft.

10. System nach Anspruch 7, wobei das Strahlungsumlenkungsmittel eine gemeinsame lichtreflektierende und/oder lichtablenkende und/oder lichtbrechende Anordnung (G) umfasst, um sowohl den energiezuführenden als auch den Markierungslaserstrahl (Be, Bm) gleichzeitig auf die verschiedenen Bereiche (A1... An) des Substrats (S) und Abschnitte (P1... Pn) davon umzulenken.

11. System nach Anspruch 10, einen optischen Kombinierer (C, C1, C2) umfassend, der dazu konfiguriert und angeordnet ist, den energiezuführenden und den Markierungslaserstrahl (Be, Bm) so zu kombinieren, dass die resultierenden kombinierten Laserstrahlen (Bme) in die gemeinsame lichtreflektierende und/oder lichtablenkende Anordnung (G) eintreten, die einem gemeinsamen optischen Pfad folgend miteinander ausgerichtet sind.

12. System nach Anspruch 10, wobei die optischen Achsen des energiezuführenden und Markierungslaserstrahls (Be, Bm) im Verhältnis 5 zueinander am Eingang der gemeinsamen lichtreflektierenden und/oder lichtablenkenden Anordnung (G) geneigt und darin durch ein reflektierendes Element (Mx) kombiniert sind, sodass sie daraus miteinander ausgerichtet einem gemeinsamen optischen Pfad folgend austreten.

13. System nach Anspruch 11 oder 12, wobei eine gemeinsame lichtreflektierende und/oder lichtablenkende Anordnung (G) ein Galvanometer-Scanner, ein Polygon-Scanner oder ein beliebiger anderer Scanning-Mechanismus ist.

14. System nach Anspruch 7, wobei das Strahlungsumlenkungsmittel zwei physisch unabhängige, jedoch betriebsmäßig synchronisierte lichtreflektierende und/oder lichtablenkende Anordnungen (G1, G2) umfasst, von denen jede jeweils einen der energiezuführenden und lasermarkierenden Strahl (Be, Bm) auf die verschiedenen Bereiche (A1... An) des Substrats (S) und Abschnitte (P1... Pn) davon umlenkt.

## Revendications

1. Procédé de marquage au laser d'un substrat, comprenant :
a) l'irradiation d'une zone (A) dudit substrat (S) avec un rayonnement d'excitation généré par une source de rayonnement d'excitation (Le) pour que ladite zone irradiée (A) 5 nécessite moins d'énergie laser pour être marquée au laser ; et
b) l'irradiation d'une partie (P) de ladite zone (A) avec un rayonnement de marquage d'un faisceau laser de marquage (Bm) généré par une source laser de marquage (Lm) pour marquer au laser ladite portion (P) de ladite zone (A) ;
dans lequel les irradiations de ladite source de rayonnement d'excitation (Le) et de ladite source laser de marquage (Lm) se chevauchent au moins partiellement l'une l'autre dans l'espace et le temps ;
dans lequel ladite irradiation de ladite étape a) et ladite irradiation de ladite étape b) sont réalisées par déplacement du rayonnement d'excitation (Be) et du faisceau laser de marquage (Bm) vers différentes zones (A1 ... An) dudit substrat (S) et portions (P1 ... Pn) de celles-ci, respectivement, de manière synchronisée ;
**caractérisé en ce que** lesdits mouvements synchronisés du rayonnement de marquage et du rayonnement d'excitation sont réalisés de sorte qu'au moins quelques-unes des zones (A1 ... An) dudit substrat (S) sont partiellement chevauchées et une ou plusieurs desdites portions (P1 ... Pn) de celles-ci sont comprises dans les régions chevauchées résultant du chevauchement desdites différentes zones (A1 ... An), et **en ce que**
le rayonnement de marquage est appliqué à la portion (P) de ladite zone (A1 ... An) qui est irradiée simultanément avec le rayonnement d'excitation mais qui a aussi été pré-excitée par une irradiation précédente avec le rayonnement d'excitation, ladite portion (P) comprenant au moins une section de chacune de deux zones (A1 ... An) consécutives du substrat (S), une desquelles étant déjà excitée et une autre desquelles étant actuellement excitée.

2. Procédé selon la revendication 1, dans lequel ledit substrat (S) est un tissu.

3. Procédé selon l'une quelconque des revendications 1 ou 2, dans lequel au moins lesdites zones (A1 ... An) dudit substrat (S) sont :
- sensibles à la chaleur, ladite source de rayonnement d'excitation (Le) de l'étape a) étant une source d'énergie thermique sélectionnée pour chauffer lesdites zones (A1 ... An), et/ou
- sensibles à la longueur d'onde pour une longueur d'onde spécifique, ledit rayonnement généré par ladite source de rayonnement d'excitation (Le) de l'étape a) se présentant sous la forme d'une onde de rayonnement ayant ladite longueur d'onde spécifique.

4. Procédé selon la revendication 3, dans lequel ladite source de rayonnement d'excitation (Le) est une source laser d'excitation configurée et agencée pour générer un faisceau laser d'excitation (Be) incident sur lesdites zones (A1 ... An) du substrat (S) avec un diamètre de spot plusieurs fois plus grand que le diamètre de spot du faisceau laser de marquage (Bm) incident sur lesdites portions (P1 ... Pn) desdites zones (A1 ... An).

5. Procédé selon la revendication 4, dans lequel ladite source laser d'excitation (Le) est configurée et agencée pour générer un faisceau laser d'excitation (Be) incident sur lesdites zones (A1 ... An) du substrat (S) avec un diamètre de spot approximativement un ordre de grandeur plus grand que le diamètre de spot du faisceau laser de marquage (Bm) incident sur lesdites portions (P1 ... Pn) desdites zones (A1 ... An).

6. Procédé selon l'une quelconque des revendications 4 ou 5, dans lequel au moins ladite source laser de marquage (Lm) fonctionne dans un mode laser pulsé.

7. Système de marquage au laser d'un substrat, comprenant :
- un premier moyen d'irradiation comprenant une source de rayonnement d'excitation (Le), qui est configuré et agencé pour irradier une zone (A) dudit substrat (S) avec un rayonnement d'excitation généré par ladite source de rayonnement d'excitation (Le), pour que ladite zone irradiée (A) nécessite moins d'énergie laser pour être marquée au laser
- un deuxième moyen d'irradiation comprenant une source laser de marquage (Lm), qui est configuré et agencé pour irradier une portion (P) de ladite zone (A) avec un rayonnement de marquage d'un faisceau laser de marquage (Bm) généré par ladite source laser de marquage (Lm), et
- un moyen de commande (CU) configuré et agencé pour commander le fonctionnement desdits premier et deuxième moyens d'irradiation pour les faire fonctionner de sorte que les irradiations de ladite source de rayonnement d'excitation (Le) et de ladite source laser de marquage (Lm) se chevauchent au moins partiellement l'une l'autre dans l'espace et le temps ;
- lesdits premier et deuxième moyens d'irradiation comprennent un moyen de redirection de rayonnement,
**caractérisé en ce que** :
- ledit moyen de commande (CU) est configuré et agencé pour commander le fonctionnement dudit moyen de redirection de rayonnement pour déplacer le rayonnement d'excitation et le faisceau laser de marquage (Bm) en les redirigeant vers différentes zones (A1 ... An) dudit substrat (S) et portions (P1 ... Pn) de celles-ci, respectivement, de manière synchronisée ;
dans lequel lesdits mouvements de rayonnement synchronisés sont réalisés de sorte qu'au moins quelques-unes des zones (A1 ... An) dudit substrat (S) sont partiellement chevauchées et une ou plusieurs desdites portions (P1 ... Pn) de celles-ci sont comprises dans les régions chevauchées résultant du chevauchement desdites différentes zones (A1 ... An),
dans lequel le rayonnement de marquage est appliqué à la portion de ladite zone (A1 ... An) qui est irradiée simultanément avec le rayonnement d'énergie, mais qui a aussi été pré-excitée par une irradiation précédente avec le rayonnement d'excitation, ladite portion (P) comprenant au moins une section de chacune de deux zones (A1 ... An) consécutives du substrat (S), une desquelles étant déjà excitée et une autre desquelles étant actuellement excitée.

8. Système selon la revendication 7, dans lequel ledit substrat (S) est un tissu.

9. Système selon la revendication 7 ou 8, dans lequel ladite source de rayonnement d'excitation (Le) est une source laser d'excitation configurée et agencée pour générer un faisceau laser d'excitation (Be) incident sur lesdites zones (A1 ... An) du substrat (S) avec un diamètre de spot approximativement un ordre de grandeur plus grand que le diamètre de spot du faisceau laser de marquage (Bm) incident sur lesdites portions (P1 ... Pn) desdites zones (A1 ... An).

10. Système selon la revendication 7, dans lequel ledit moyen de redirection de rayonnement comprend un arrangement conjoint de réflexion de lumière et/ou de déflexion de lumière et/ou de diffraction de lumière (G), pour rediriger à la fois les faisceaux laser d'excitation et de marquage (Be, Bm) simultanément vers lesdites différentes zones (A1 ... An) du substrat (S) et portions (P1 ... Pn) de celles-ci.

11. Système selon la revendication 10, comprenant un combinateur optique (C, C1, C2) configuré et agencé pour combiner les faisceau laser d'excitation et faisceau laser de marquage (Be, Bm) de sorte que les faisceaux laser combinés en résultant (Bme) entrent dans ledit arrangement conjoint de réflexion de lumière et/ou de déflexion de lumière (G) co-alignés suivant un trajet optique commun.

12. Système selon la revendication 10, dans lequel les axes optiques des faisceaux laser d'excitation et de marquage (Be, Bm) sont inclinés l'un par rapport 5 à l'autre à l'entrée dudit arrangement conjoint de réflexion de lumière et/ou de déflexion de lumière et/ou de diffraction de lumière (G) et combinés à l'intérieur de celui-ci par un élément réfléchissant (Mx) de sorte qu'ils en sortent co-alignés suivant un trajet commun.

13. Système selon la revendication 11 ou 12, dans lequel ledit arrangement conjoint de réflexion de lumière et/ou de déflexion de lumière (G) est un scanner galvanométrique, un scanner polygonal ou tout autre mécanisme de balayage.

14. Système selon la revendication 7, dans lequel ledit moyen de redirection de rayonnement comprend deux arrangements de réflexion de lumière et/ou de déflexion de lumière (G1, G2) physiquement indépendants, mais fonctionnellement synchronisés, chacun pour respectivement rediriger un desdits faisceaux laser d'excitation et de marquage (Be, Bm) vers lesdites différentes zones (A1 ... An) du substrat (S) et portions (P1 ... Pn) de celles-ci.
